Europäisches Patentamt

European Patent Office

Office européen des brevets

(11) Veröffentlichungsnummer: **0 312 687**

**A2**

(12) **EUROPÄISCHE PATENTANMELDUNG**

(21) Anmeldenummer: 88107140.1

(22) Anmeldetag: 04.05.88

(51) Int. Cl.⁴: **B03C 3/28**

Die Bezeichnung der Erfindung wurde geändert (Richtlinien für die Prüfung im EPA, A-III, 7.3).

(30) Priorität: 19.09.87 DE 3731575

(43) Veröffentlichungstag der Anmeldung:
26.04.89 Patentblatt 89/17

(84) Benannte Vertragsstaaten:
AT BE CH DE ES FR GB IT LI LU NL SE

(71) Anmelder: **Firma Carl Freudenberg**
**Höhnerweg 2-4**
**D-6940 Weinheim/Bergstrasse(DE)**

(72) Erfinder: **Föttinger, Walter, Dr.**
**Leberstrasse 77**
**D-6940 Weinheim(DE)**
Erfinder: **Hauber, Michael, Dr.**
**Akazienweg 18**
**D-6940 Weinheim(DE)**
Erfinder: **Weghmann, Arnold**
**Kurpfalzstrasse 26**
**D-6940 Weinheim(DE)**

(74) Vertreter: **Weissenfeld-Richters, Helga, Dr.**
**Höhnerweg 2**
**D-6940 Weinheim/Bergstrasse(DE)**

(54) **Elektret-Filterpack.**

(57) Ein Filterpack besteht aus mindestens zwei Faserlagen, welche alle elektretisiert und höchstens 10 mm dick sind, und es besitzt in Strömungsrichtung eine zunehmende Pakkungsdichte bei abnehmenden Faserdurchmesser.

EP 0 312 687 A2

**Filterpack**

Die vorliegende Erfindung betrifft ein mehrlagiges Filterpack in der Ausgestaltung des Oberbegriffs von Anspruch 1. Aus der DE-PS 29 41 094 ist bereits ein gattungsgemäßes Filterelement bekannt, welches jedoch aus einer Kombination von nicht-elektretisiertem Filtermaterial als Vorfilter und elektretisiertem Filtermaterial als Nachfilter besteht. Letzteres kann nach dem dortigen Beispiel 3 mehrschichtig, mit gleich ausgebildeten Faserlagen, aufgebaut sein, jedoch immer in Kombination mit dem nicht ladungstragenden Vorfilter, welches größere Teilchen vom eigentlichen Elektretfilter fernhalten soll.

Den derzeit immer häufiger bestehenden Anforderungen, in erheblichen Mengen mehrheitlich oder gezielt kleine und kleinste Partikeln (von 10 bis 0,05 $\mu$m), auch Bakterien, genügend sicher abfiltern zu müssen, genügt ein solches Filterelement nicht:

Ein mittelgrober, ungeladener Vorfilter läßt die kleinen Teilchen ungehindert durch; diese belasten gleich zu Beginn des Filtervorganges die angrenzenden Elekretfilter in vollem Umfang. Besitzen diese nun, wie in der angegebenen Druckschrift bevorzugt, einen geringen Luftwiderstand, wirken sie also nahezu ausschließlich elektrostatisch filternd, so werden sie durch eine sehr große Anzahl auftreffender Kleinpartikeln infolge Neutralisation ihrer Ladung rasch als Feinstfilter unwirksam und zum reinen Grobfilter. Der Abscheidegrad bezüglich der kleinen Teilchen sinkt dabei rasch bis um den Faktor 10 des Anfangswertes ab. Um diesen nachteiligen Effekt zu vermeiden, könnten die Elektretlagen so dicht ausgestaltet werden, daß in ihnen der elektrostatische mit dem mechanischen Abscheideeffekt zusammenwirkt. Dies würde jedoch zu einem untragbar hohen Druckabfall führen, une ein solcher Filterkomplex wäre bei hoher Beaufschlagung rasch mit Teilchen zugesetzt.

Würde bereits der nichtgeladene Vorfilter dichter ausgebildet, so wäre der Luftwiderstand des gesamten Luftfilterelementes ebenfalls in ungünstiger Weise erhöht.

Die Aufgabe der vorliegenden Erfindung besteht darin, ein elektretisiertes Filterpack aus mindestens zwei unmittelbar aufeinander folgenden Faserlagen anzugeben, das einer Belastung mit mehrheitlich oder ausschließlich kleinen und kleinsten Teilchen von 10 bis 0,05 $\mu$m Durchmesser bei hohen Standzeiten, größtmöglicher Filterleistung und dennoch geringem Luftwiderstand gewachsen ist, ohne die obengenannten Nachteile zu zeigen. Wichtig ist dabei, daß möglichst viele dieser kleinen Teilchen bereits eingangsseitig abgefangen werden.

Diese Aufgabe wird gelöst durch ein mehrlagiges Elektret-Filterpack, aufgebaut aus Faserlagen mit den kennzeichnenden Merkmalen des Anspruchs 1. Besonders bevorzugte Ausgestaltungen gehen aus den Unteransprüchen hervor.

Der progressive Aufbau des erfindungsgemäßen Filterpacks, bei dem alle Faserlagen elektretisiert sind, führt dazu, daß bereits eingangsseitig mehr als 50% der Teilchen mit einem Korngrößenspektrum von 10 bis ca. 0,5 $\mu$m abgefangen werden, ohne Zugeständnisse an den Luftwiderstand machen zu müssen. Die besonders feinen Fasern des strömungsmäßig letzten Nachfilters können so, unbelastet von gröberen Teilchen, als "Polizeifilter" für die kleinsten Partikeln um 0,05 $\mu$m Größe wirken, was bereits den Dimensionen von Bakterien entspricht.

Der Abscheidegrad allein des Vorfilters erhöht sich bei Verwendung eines erfindungsgemäßen Filterpacks gegenüber den bekannten Versionen - bei Belastung mit Teilchen von 10 bis 0,05 $\mu$m Korngröße - von 10 auf bis zu 75%.

Die Erhöhung des Abscheidegrades des Vorfilters führt zu einer Verbesserung des Gesamtabscheidegrades des Filterpacks. Wird dies nicht notwendig gefordert, soll jedoch der Gesamtwiderstand des Filterpacks reduziert werden, so wird der Abscheidegrad der ausgangsseitigen Lage zweckmäßig durch Verringerung des Flächengewichtes gesenkt.

Der Gesamtabscheidegrad des erfindungsgemäßen Filterpacks ist bei Staubkonzentrationen von oder über 1 mg/m$^3$ über eine Beladungszeit bis zum Erreichen der zweifachen Anfangsdruckdifferenz nahezu konstant. Die im weiteren Verlauf abnehmende Elektretwirkung wird durch die steigende mechanische, d. h. sterische Filterwirkung infolge des Staubkuchenaufbaus mehr als kompensiert.

Das Staubspeichervermögen des Filterpacks wird durch die Elektretfilterwirkung des Vorfilters deutlich erhöht, je nach Staubart und Staubpartikelgröße bis zu einem Faktor 3.

Für die Ausgestaltung des erfindungsgemäßen Filterpacks werden zweckmäßig Fasern mit hohem elektrischem Isolationswiderstand verwendet. Besonders gute Filtereigenschaften werden erreicht, wenn die eingangsseitige Lage aus Fasern mit Durchmessern von 10 bis 30 $\mu$m bei einer Packungsdichte von 0,01 bis 0,07, die ausgangsseitige Lage aus Fasern mit Durchmessern von 0,5 bis $\mu$m bei einer Packungsdichte von 0,03 bis 0,1 gebildet ist.

Als Packungsdichte ($\alpha$) wird hier und im folgenden die Differenz zwischen 1 (keine Porosität) und der Porosität $\epsilon$ verstanden:

$$\alpha = 1 - \epsilon$$

Die Porosität $\epsilon$ ergibt sich dabei gemäß DIN 53 855 aus dem Quotienten:

$$\varepsilon = \frac{\varrho_N - \varrho_{Rx}}{\varrho_N}$$

$$\varepsilon = \text{Porosität}$$
$$\varrho_N = \text{Normaldichte}$$
$$\varrho_{Rx} = \text{Rohdichte}$$

Diese Parameter stellen gleichsam die Eckdaten dar, mit denen - unabhängig vom Vorhandensein weiterer Schichten -hohe Abscheidungsgrade, ein hohes Staubspeichervermögen sowie ein geringer Luftwiderstand erzielt werden können.

Zweckmäßig bestehen die Fasern der eingangsseitigen Lage aus Polypropylen und/oder Polyethylen, die der ausgangsseitigen Lage aus Polypropylen, Polyethylen, Polycarbonat oder Polysulfon.

Eine weitere, bei höchster Filterleistung für einen weiten Korngrößenbereich von 10 bis 0,05 $\mu$m Staubpartikeldurchmesser sehr wirtschaftliche, bevorzugte Ausgestaltung besteht darin, daß eine dritte, ausgangsseitige Lage vorgesehen ist, welche aus Fasern mit einem Durchmesser im Bereich 10 bis 30 $\mu$m bei einer Packungsdichte von 0,01 bis 0,07 aufgebaut ist. Diese Schicht sollte filtertheoretisch keine Wirkung zeigen; überraschenderweise wird aber eine deutliche Erhöhung des Gesamtabscheidegrades des Filterpacks erzielt, ohne daß dabei eine signifikante Erhöhung des Gesamtwiderstandes in Kauf genommen werden muß.

Für besondere Einsatzgebiete, in denen stark geladene Staubpartikel im Bereich 10 bis 0,05 $\mu$m vorhanden sind, ist eine Variante des erfindungsgemäßen Filterpacks besonders geeignet, deren einzelne Faserschichten alternierend eine positive und eine negative Ladung aufweisen.

Damit ist sichergestellt, daß sowohl positiv als auch negativ geladene Staubpartikel besonders wirksam abgeschieden werden.

Das erfindungsgemäße Filterpack eignet sich aufgrund seiner hohen Filterleistung bezüglich kleiner und kleinster Partikeln und seines im Vergleich zu nicht elektrisierten Filterpacks gleicher Filterleistung besonders niedrigen Luftwiderstandes insbesondere für Reinluftanlagen und Atemschutzfilter; bevorzugt kann es auch als Nachfilter für Großfiltersysteme, wie z. B. Staubsaugerbeutelfilter, verwendet werden.

Anhand der folgenden Beispiele werden der Aufbau und die Filtereigenschaften von Luftfiltervarianten der erfindungsgemäßen Art im Detail näher erläutert.

Beispiel 1

a) eingangsseitige Faserlage

100% Polypropylen, 3,3 dtex Flächengewicht (DIN 53 854):     120 g/m²
Dicke (DIN 53 855):     3,5 mm
Porosität:     0,962
Packungsdichte:

b) ausgangsseitige Faserlage

100% Polycarbonat, mittlerer Faserdurchmesser 8 $\mu$m Flächengewicht (DIN 53 854):     16 g/m²
Dicke (DIN 53 855):     0,3 mm
Porosität:     0,956
Packungsdichte:     0,044

Die verschiedenen Filterschichten (Lagen) wurden flächig in eine Halterung eingebaut und in Anlehnung

3

an DIN 3181/T2 filtertechnisch überprüft. Dabei wurde der Durchlaßgrad gegenüber NaCl ($D_{NaCl}$) bei einer Durchströmgeschwindigkeit von 8 cm/s bestimmt.

Die Ergebnisse sind in der nachfolgenden Tabelle aufgeführt:

| | Druckdifferenz $\Delta p$ (Pa) bei 8 cm/s | $D_{NaCl}$ (%) bei 8 cm/s |
|---|---|---|
| Lage a) ohne Elektretwirkung | 3 | 87 |
| Lage a) mit Elektretwirkung | 3 | 25 |
| Lage a) ohne, Lage b) mit Elektretwirkung | 16 | 14,5 |
| beide Lagen a) + b) mit Elektretwirkung | 16 | 5,5 |

Die Elektretisierung der eingangsseitigen Schicht erhöhte deren Filterwirkung von 87% Durchlaßgrad auf 25%. Die Filterleistung des Filterpacks verbesserte sich von 14 auf 5,5% Durchlaßgrad.

Beispiel 2

a) eingangsseitige Faserlage

100% Polypropylen, 1,7 dtex Flächengewicht (DIN 53 854):     80 g/m²
Dicke (DIN 53 855):     2,8 mm
Porosität:     0,969
Packungsdichte:     0,031

b) mittlere Faserlage

| 100% Polycarbonat, mittlerer Faserdurchmesser 8 μm | | |
|---|---|---|
| Flächengewicht (DIN 53 854): | ba) | 16 g/m² |
| " " : | bb) | 8 g/m² |
| Dicke (DIN 53 855): | ba) | 0,3 mm |
| " " : | bb) | 0,15 mm |
| Porosität: | | 0,956 |
| Packungsdichte: | | 0,044 |

c) ausgangsseitige Faserlage

gleich zur eingangsseitigen Lage a)

Die verschiedenen Filterschichten (Lagen) wurden flächig in eine Halterung eingebaut und filtertechnisch überprüft. Dabei wurde gravimetrisch der Gesamtabscheidungsgrad A gegenüber einem Rußaerosol ($x_{50}$ = 0,02 μm) und das Staubspeichervermögen des Filterpacks bestimmt. Die Filterdaten wurden ermittelt bei einer Durchströmgeschwindigkeit von 25 cm/s, einer Enddruckdifferenz $\Delta p_E$ von 600 Pa und einer Rußkonzentration von 67 mg/m³ bei einer Belastung von ca. 1 g/m²·min. Die Ergebnisse sind in der folgenden Tabelle aufgeführt:

| | Flächengewicht Schicht b) (g/m²) | $\Delta P_A$ (Pa) | $\Delta P_E$ (Pa) | A (%) | SSV (g/m²) |
|---|---|---|---|---|---|
| a) + c) ohne Elektretwirkung, ba) mit Elektretwirkung | 16 | 50 | 600 | 96,4 | 34,3 |
| a) + ba) + c) mit Elektretwirkung | 16 | 50 | 600 | 98 | 70,6 |
| a) + bb) + c) mit Elektretwirkung | 8 | 35 | 600 | 96,1 | 81,1 |

Die Elektretisierung der beiden äußeren Lagen verbesserte den Abscheidegrad des Filterpacks gegen Ruß von 96,4 auf 98%. Gleichzeitig wurde des Staubspeichervermögen (SSV) bei einer Enddruckdifferenz $\Delta p_E$ von 600 Pa um den Faktor

$$\frac{70,6}{34,3} = 2,06 \text{ erhöht.}$$

Die Reduzierung des Flächengewichtes der mittleren Filterschicht von 16 g/m² auf 8 g/m² verminderte die Anfangsdruckdifferenz $\Delta p_A$ des Filterpacks auf 35 Pa und erhöhte das Staubspeichervermögen von 70,6 auf 81,1 g/m² ohne Beeinträchtigung des Gesamtabscheidegrades (96,4 zu 96,1 %).

Beispiel 3

a) eingangsseitige Faserlage wie Beispiel 2a)

b) mittlere Faserlage

100 % Polycarbonat, mittlerer Faserdurchmesser 5 μm Flächengewicht (DIN 53 854):     11 g/m²
Dicke (DIN 53 855):     0,2 mm
Porosität:     0,954
Packungsdichte:     0,046

c) ausgangsseitige Faserlage

gleich der eingangsseitigen Lage a)

Die filtertechnsiche Prüfung erfolgte analog Beispiel 1 und ergab:

| | $\Delta p$ (Pa) bei 8 cm/s | $D_{NaCl}$ (%) bei 8 cm/s |
|---|---|---|
| Schicht a) + b) mit Elektretwirkung | 17 | 5,4 |
| Schicht a) + b) + c) mit Elektretwirkung | 19 | 4,4 |

Der zusätzliche Aufbau einer dritten, ausgangsseitig angeordneten Filterschicht, identisch zur eingangsseitigen Schicht, erhöhte also die Gesamtfilterleistung des Filterpacks um über 18%.

**Ansprüche**

1. Mehrlagiges Filterpack mit Elektret-Eigenschaften, bestehend aus mindestens zwei unmittelbar aufeinander folgenden Faserlagen, dadurch gekennzeichnet, daß alle Lagen eine permanente elektrische Ladung aufweisen, daß in Strömungsrichtung von Lage zu Lage der Durchmesser der Fasern abnimmt sowie die Packungsdichte zunimmt und daß die einzelnen Lagen eine Dicke von höchstens 10 mm besitzen.

2. Filterpack nach Anspruch 1, dadurch gekennzeichnet, daß die eingangsseitige Lage aus Fasern mit Durchmessern im Bereich 10 bis 30 $\mu$m bei einer Packungsdichte von 0,01 bis 0,07 die ausgangsseitige Lage aus Fasern mit Durchmessern im Bereich 0,5 bis 10 $\mu$m bei einer Packungsdichte von 0,03 bis 0,1 gebildet ist.

3. Filterpack nach Anspruch 1, gekennzeichnet durch einen dreilagigen Aufbau, wobei eine ausgangsseitige Lage aus Fasern mit Durchmessern im Bereich 10 bis 30 $\mu$m bei einer Packungsdichte von 0,01 bis 0,07 gebildet ist.

4. Filterpack nach einem der vorhergehenden Ansprüche, dadurch gekennzeichnet, daß die aneinandergrenzenden Faserlagen jeweils zueinander gegensätzliche Ladungen tragen.

5. Verwendung eines Filterpacks nach einem der vorhergehenden Ansprüche als Nachfilter zu einem Grobfilter-System.